# EUROPÄISCHE PATENTSCHRIFT

(11) **EP 3 163 293 B1**
(45) Veröffentlichungstag und Bekanntmachung des Hinweises auf die Patenterteilung: **20.06.2018**
(21) Anmeldenummer: 16195475.5
(22) Anmeldetag: 25.10.2016
(51) Int. Cl.: G01N 21/64, G01N 21/94

(54) **VERFAHREN ZUM NACHWEIS VON OBERFLÄCHENRÜCKSTÄNDEN AUF BAUTEILEN MITTELS UV-BESTRAHLUNG**
METHOD FOR THE DETECTION OF SURFACE REMNANTS ON COMPONENTS BY MEANS OF UV IRRADIATION
PROCÉDÉ DE DÉTECTION DE RÉSIDUS DE SURFACE SUR DES COMPOSANTS À L'AIDE DU RAYONNEMENT UV

(30) Priorität: 28.10.2015 DE 102015221095
(43) Veröffentlichungstag der Anmeldung: 03.05.2017
(73) Patentinhaber: Airbus Defence and Space GmbH, 82024 Taufkirchen (DE)
(72) Erfinder: MEER, Thomas, 85658 Egmating (DE)
(74) Vertreter: Isarpatent

(56) Entgegenhaltungen:
- EP-A2- 2 778 661
- WO-A1-2015/059241
- JP-A- H09 136 323
- JP-A- H09 150 416
- JP-A- 2012 184 929
- US-A1- 2012 279 633

## Beschreibung

Die vorliegende Erfindung betrifft ein Verfahren zum Nachweis von Oberflächenrückständen auf Bauteilen aus Faserverbundkunststoff mittels UV-Bestrahlung. Insbesondere befasst sich die vorliegende Erfindung mit dem Nachweis von herstellungsbedingten Oberflächenrückständen auf Bauteilen aus kohlenstofffaserverstärktem Kunststoff für den Einsatz in Luft- oder Raumfahrzeugen.

UV-Bestrahlung ist bekannt zum Nachweis von Defekten während des Herstellungsverfahrens Bauteilen aus Faserverbundkunststoff (JP2012184929) oder zum Nachweis von Verunreinigungen (US2012/0279633) oder Beschädigungen (EP2778661, WO2015/059241) von Bauteilen aus faserverstärktem Kunststoff. Obwohl in vielfältigen Anwendungen zur Untersuchung von Oberflächen unterschiedlichster Strukturen und unterschiedlicher Materialien verwendbar, werden die vorliegende Erfindung sowie die ihr zugrunde liegende Problematik in Bezug auf die Oberflächenanalyse von Flugzeugstrukturen aus kohlenstofffaserverstärktem Kunststoff näher erläutert.

Für die industrielle Fertigung von Formbauteilen aus faserverstärktem Kunststoff (FVK), insbesondere kohlefaserverstärktem Kunststoff (CFK), werden oftmals so genannte Formwerkzeuge verwendet, in denen die Bauteile ihre Gestalt erhalten. Hierzu kann beispielsweise ein Halbzeug aus Fasermaterial, z.B. Matten aus Kohlenstofffaserlagen, mit einem flüssigen Matrixmaterial, z.B. Epoxidharz, imprägniert werden und in dem Formwerkzeug durch Anwendung von Druck und Temperatur ausgehärtet werden. Die Formoberfläche des Formwerkzeugs bestimmt hierbei die Oberflächenkontur des fertigen Bauteils, wie es nach dem Aushärten zurückbleibt. Solche Formwerkzeuge werden vor ihrer Verwendung oftmals mit einem Trennmittel beschichtet, um die fertigen Bauteile möglichst leicht aus dem Formwerkzeug auslösen zu können. Auf der Formwerkzeug abgewandten Seite des Bauteils kann ein Abreißgewebe (so gennantes Peel-Ply) aus Nylon oder Polyester oder dergleichen vor der Aushärtung auf den Laminataufbau des zu bildenden Bauteils aufgelegt werden, wobei das Abreißgewebe das flüssige Matrixmaterial aufnimmt und nach dem Aushärten wieder abgezogen werden kann. Das Abreißgewebe erzeugt während der Aushärtung eine definierte und gleichzeitig aufgerauhte Oberfläche, welche in der Weiterverarbeitung vorteilhaft sein kann, z.B. für eine folgende Verklebung mit weiteren Bauteilen oder eine anschließende Beschichtung des Bauteils. Nach dem Entformen des Bauteils bzw. Entfernen des Abreißgewebes können, je nach Fertigungsmethode, unerwünschte Trennmittelrückstände bzw. Peel-Ply-Rückstände an dem Bauteil zurückbleiben. Diese Rückstände können die Adhäsion von Klebstoffen oder Beschichtungen beeinflussen.

Generell ist es wünschenswert FVK-Bauteile mit einer möglichst genau definierten und sauberen Oberfläche zu bilden und zu erhalten, um die weitere Verwendung bzw. Bearbeitung zu gewährleisten. So kann beispielsweise das Klebeverhalten eines Bauteils dadurch beeinflusst werden, dass dessen Oberfläche verunreinigt ist bzw. Rückstände von unerwünschten Herstellungsmaterialien aufweist. Weiterhin sind gute Adhäsionseigenschaften vorteilhaft für eine Lackierung oder Beschichtung eines Bauteils. Demnach besteht ein Bedarf nach Verfahren, welche herstellungsbedingte Rückstände auf Oberflächen von FVK-Bauteilen erfassen.

Röntgenphotoelektronenspektroskopie ("X-ray photoelectron spectroscopy", XPS) ermöglicht es beispielsweise, die chemische Zusammensetzung der Oberfläche von kleinen Stoffproben unter Laborbedingungen zerstörungsfrei zu untersuchen. Ferner können die Benetzungseigenschaften einer Oberfläche durch Flüssigkeiten charakteristisch für die Verunreinigung bzw. Verklebbarkeit der Oberfläche sein. Werden einzelne Flüssigkeitstropfen auf die Oberfläche aufgebracht, so können über Kontaktwinkelmessungen (KW) Rückschlüsse über die Sauberkeit der Oberfläche gezogen werden. Beim so genannten Aerosol-Wetting werden Aerosolnebel großflächig auf Oberflächen aufgesprüht, um ähnlich wie beim KW das Benetzungsverhalten zu bestimmen. Darüber hinaus können die Benetzungseigenschaften auch in weiteren Verfahren genutzt werden. So kann beispielsweise in einem so genannten Water-Brake-Test die Benetzung von Oberflächen mit größeren Wassermengen grob bestimmt werden. Eine ausreichend genaue Kontaktwinkelmessung einer strukturierten Oberfläche, wie sie nach Peel-Ply-Abzug zurückbleiben kann, gestaltet sich als schwierig.

Vor diesem Hintergrund liegt der vorliegenden Erfindung die Aufgabe zugrunde, Lösungen für einfache Nachweisverfahren zu finden, welche es ermöglichen, Oberflächenverunreinigungen großflächig auch auf strukturierten und ggf. rauhen Oberflächen zu messen, ohne die Oberflächen mit zusätzlichen Stoffen zu verunreinigen.

Erfindungsgemäß wird diese Aufgabe gelöst durch ein Verfahren mit den Merkmalen des Patentanspruchs 1.

Demgemäß ist ein Verfahren zum Nachweis von Oberflächenrückständen auf Bauteilen aus Faserverbundkunststoff vorgesehen. Das Verfahren umfasst Bestrahlen einer Oberfläche des Bauteils mit Ultraviolett-Strahlung durch eine Ultraviolett-Strahlungsquelle. Das Verfahren umfasst ferner Erfassen von Fluoreszenzstrahlung, welche von der Oberfläche des Bauteils aufgrund der Bestrahlung mit der Ultraviolett-Strahlung emittiert wird. Das Verfahren umfasst ferner Charakterisieren von Oberflächenrückständen auf Basis der erfassten Fluoreszenzstrahlung.

Die der vorliegenden Erfindung zugrunde liegende Idee besteht darin, Ultraviolett-Strahlung zur zerstörungsfreien Analyse von Oberflächen von faserverstärkten Kunststoffbauteilen zu verwenden. Bestimmte Peel-Plys und andere Trennmittel weisen fluoreszierende Eigenschaften unter UV-Bestrahlung auf. Herstellungsbedingte Rückstände dieser Materialien auf Oberflächen lassen sich demnach sichtbar machen, indem die Oberflächen der Bauteile mit UV-Licht beleuchtet werden. Unter normaler Beleuchtung im visuellen Spektrum sind diese Rückstände typischerweise nicht sichtbar. Der faserverstärkte Kunststoff, beispielsweise CFK bzw. auf der Oberfläche befindliches Epoxidharz, fluoresziert hierbei nicht und erscheint unter UV-Bestrahlung dunkel bzw. schwarz. Die abgestrahlte Fluoreszenzstrahlung kann somit zur Charakterisierung von Rückständen auf der Oberfläche bzw. von Materialverunreinigungen auf dieser herangezogen werden. Prinzipiell lassen sich derart auch Abweichungen, Beschädigungen oder Kontaminationen der Oberfläche nachweisen, sofern sich diese in der abgestrahlten Fluoreszenzstrahlung bemerkbar machen.

Ein besonderer Vorteil der erfindungsgemäßen Lösung besteht darin, dass sich Fertigungsfehler bzw. fertigungsbedingte Rückstände (z.B. Peel-Ply-Rückstände, Faserausrisse etc.) oder dergleichen großflächig, schnell und direkt am untersuchten Bauteil feststellen lassen. Für die visuelle Betrachtung kann beispielsweise schon ein UV-Strahler, wie beispielsweise ein Schwarzlicht-Strahler, ausreichend sein. Oberflächenrückstände können visuell erfasst werden und im Anschluss beseitigt bzw. ausgebessert werden. Beispielsweise kann eine Oberflächenbehandlung in Form von Schleifen erfolgen oder die Oberfläche kann mit einem Atmosphärendruckplasma bzw. einem Laser behandelt werden. Das Verfahren ist somit unter anderem besonders einfach und kostengünstig. Im Fall der vorliegenden Erfindung besteht insbesondere keine Gefahr von Kontaminationen oder anderen Veränderungen der Oberfläche aufgrund der zur Analyse eingesetzten Mittel.

Vorteilhafte Ausgestaltungen und Weiterbildungen ergeben sich aus den weiteren Unteransprüchen sowie aus der Beschreibung unter Bezugnahme auf die Figuren.

Gemäß einer Weiterbildung kann das Erfassen der Fluoreszenzstrahlung das Detektieren der Fluoreszenzstrahlung mit einem Fluoreszenzstrahlungsdetektor umfassen. In dieser Weiterbildung kann die Fluoreszenzstrahlung somit auch quantitativ erfasst werden, so dass diese beispielsweise mit entsprechenden Mitteln analysierbar ist.

Das Erfassen der Fluoreszenzstrahlung kann das Messen von charakteristischen Messgrößen der detektierten Fluoreszenzstrahlung umfassen. Die charakteristischen Messgrößen können beispielsweise einer anschließenden Analyse der Beschaffenheit der Oberfläche zugrunde gelegt werden. Prinzipiell kann der Fachmann je nach Anforderungen und Anwendung wählen, ob eine eher einfache und dafür robuste Analyse einer Oberfläche bevorzugt ist. Alternativ oder zusätzlich können beispielsweise auch komplexe multivariate Messgrößen erfasst werden, auf deren Basis eine gründliche genaue Analyse der Beschaffenheit einer Oberfläche durchführbar ist.

Die charakteristischen Messgrößen können Strahlungsspektren und/oder Intensitätsverteilungen der detektierten Fluoreszenzstrahlung umfassen. Beispielsweise kann eine rein visuelle Erfassung und Charakterisierung der Oberflächenrückstände in dieser Weiterbildung mit einer Intensitätsmessung ergänzt oder von dieser ersetzt werden. Auch in dieser Weiterbildung benötigt das Verfahren nach wie vor äußerst geringen Aufwand und kann kostengünstig im Zuge einer Klein- oder Großserienfertigung eingesetzt werden. Prinzipiell sind im Sinne der Erfindung jedoch auch komplexere spektroskopische Messungen möglich und vorgesehen.

Gemäß einer Weiterbildung kann das Charakterisieren der Oberflächenrückstände das Analysieren der charakteristischen Messgrößen der detektierten Fluoreszenzstrahlung durch eine Analyseeinrichtung umfassen. Die Analyseeinrichtung kann beispielsweise voll- oder halbautomatisch eingerichtet sein und beispielsweise einen Mikroprozessor beinhalten und/oder mit einer Datenverarbeitungsvorrichtung, einem Computer oder ähnlichem verbunden sein. Prinzipiell kann die Analyse in dieser Weiterbildung demnach automatisch ablaufen, wobei insbesondere sämtliche Tools und Hilfsmittel der elektronischen Datenanalyse zum Einsatz kommen können.

Die Analyseeinrichtung kann die charakteristischen Messgrößen mit einer oder mehreren Referenzoberflächen vergleichen. Beispielsweise können Bauteile mit gereinigten bzw. definiert verunreinigten Oberflächen bereitgestellt werden. Oder es können Bauteile mit speziell präparierten Oberflächen herangezogen werden. Durch Kalibrierung des erfindungsgemäßen Verfahrens kann dieses beispielsweise auf solche Referenzbauteile mit bekannten Eigenschaften angewendet werden. Eine Analyse der unbekannten Oberflächenrückstände eines Bauteils kann durch Verwendung solcher Kalibrierungsbauteile bzw. -oberflächen ergänzt werden bzw. deren Genauigkeit kann durch Verwendung dieser verbessert werden.

Gemäß einer Weiterbildung kann das Verfahren zum Nachweis von Oberflächenrückständen auf einer Oberfläche eines Bauteils aus kohlenstofffaserverstärktem Kunststoff (CFK) durchgeführt werden. Kohlefaserverstärkter Kunststoff, insbesondere das als Matrixmaterial dienende Epoxidharz, erscheinen dunkel bzw. schwarz unter Bestrahlung mit Ultraviolett-Strahlung, so dass sich darauf befindliche fluoreszierende Rückstände besonders gut abheben.

Gemäß einer Weiterbildung können die Oberflächenrückstände Komponenten von Trennmitteln zur Herstellung von FVK-Bauteilen umfassen.

Gemäß der Erfindung umfassen die Oberflächenrückstände Abreißgewebe-Rückstände. Abreißgewebe (so genannte Peel-Plys) können beispielsweise als Nylon- und/oder Polyester-Gewebe oder ähnlich vorliegen.

Die Komponenten von Trennmitteln werden auf Basis von Flächenabschnitten der Oberfläche mit erhöhter Intensität der erfassten Fluoreszenzstrahlung charakterisiert. Beispielsweise fluoreszieren typische Abreißgewebe bzw. deren Beschichtungen unter UV-Strahlung, so dass Rückstände solcher Gewebe auf einem Bauteil aus nicht bzw. kaum fluoreszierendem CFK deutlich sichtbar sind.

Gemäß einer Weiterbildung können die Oberflächenrückstände Oberflächenbeschädigungen umfassen. Während Rückstände aus Abreißgewebe typischerweise stark fluoreszieren, erscheinen Faserausrisse oder dergleichen von Kohlenstofffasern in einem CFK-Bauteil besonders dunkel unter Bestrahlung mit UV-Licht und lassen sich somit ebenfalls abgrenzen.

Die Oberflächenbeschädigungen können auf Basis von Flächenabschnitten der Oberfläche mit minimaler Intensität der erfassten Fluoreszenzstrahlung charakterisiert werden.

Gemäß einer Weiterbildung kann die Ultraviolett-Strahlungsquelle dazu ausgebildet sein, Ultraviolett-Strahlung im nahen Ultraviolett mit Wellenlängen im Bereich von 310 nm bis 400 nm abzustrahlen. Die Ultraviolett-Strahlungsquelle kann demnach insbesondere eine UVA-A Lichtquelle sein, d.h. Schwarzlicht aussenden.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren angegebenen Ausführungsbeispiele näher erläutert. Es zeigen dabei:
- Fig. 1: eine schematische Draufsicht auf eine Oberfläche eines CFK-Bauteils, welches in einem Verfahren gemäß einer Ausführungsform der Erfindung mit einer Ultraviolett-Strahlungsquelle bestrahlt wird;
- Fig. 2: eine schematische Draufsicht auf eine Oberfläche eines CFK-Bauteils, welches in einem Verfahren gemäß einer weiteren Ausführungsform der Erfindung mit einer Ultraviolett-Strahlungsquelle bestrahlt wird; und
- Fig. 3: ein schematisches Ablaufdiagramm eines Verfahrens zum Nachweis von Oberflächenrückständen auf Bauteilen aus Faserverbundkunststoff gemäß einer weiteren Ausführungsform der Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

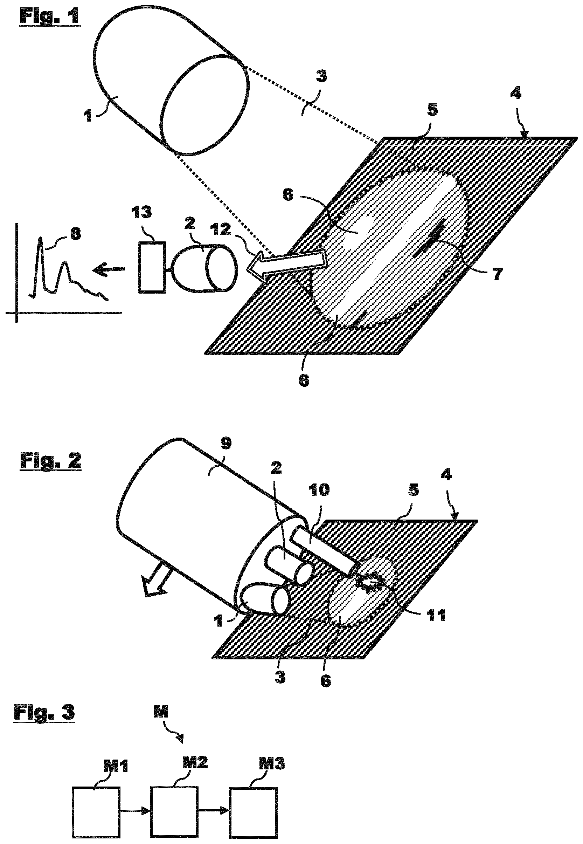

Fig. 1 zeigt eine schematische Draufsicht auf eine Oberfläche eines CFK-Bauteils, welches in einem Verfahren gemäß einer Ausführungsform der Erfindung mit einer Ultraviolett-Strahlungsquelle bestrahlt wird. Fig. 3 zeigt hierzu ein schematisches Ablaufdiagramm des grundlegenden Verfahrens zum Nachweis von Oberflächenrückständen auf Bauteilen aus Faserverbundkunststoff.

In Fig. 1 bezeichnet das Bezugszeichen 4 ein Bauteil. Beispielsweise kann es hierbei um ein Bauteil 4 aus kohlenfaserverstärktem Kunststoff (CFK) handeln, dessen Oberfläche 5 herstellungsbedingt mit Oberflächenrückständen 6 von Trennmitteln bzw. Trennmaterialien verunreinigt bzw. kontaminiert ist. Insbesondere kann es sich hierbei um ein Bauteil 4 für den Einsatz in Luft- oder Raumfahrzeugen handeln, wie beispielsweise ein Strukturbauteil (Stringer, Spant, Hautfeldabschnitt oder dergleichen) oder ein Kabinenausstattungselement etc. Bei den Oberflächenrückständen 6 kann es sich beispielsweise um Reste oder Rückstände von Abreißgeweben, d.h. einem Peel-Ply, aus dem Fertigungsprozess des Bauteils 4 handeln, welche beim Abziehen nach dem Aushärten des Bauteils 4 nicht vollständig entfernt wurden oder nicht sichtbare Rückstände hinterlassen hat. Diese Oberflächenrückstände 6 können nachfolgende Klebe- und/oder Beschichtungsprozesse stören und werden somit bevorzugt entfernt, beispielsweise durch Schleifen, Lasern und/oder Plasmabehandlung. Ferner kann das Bauteil 4 Oberflächenbeschädigungen 7 oder dergleichen ungewünschte Herstellungsfehler aufweisen. Beispielsweise kann eine solche Oberflächenbeschädigung 7 einen oder mehrere Faserausrisse der Kohlenstofffasern des Bauteils 4 umfassen. Das im Folgenden erläuterte Verfahren M dient zum Nachweis von Oberflächenrückständen 6 auf Bauteilen 4 aus Faserverbundkunststoff.

Wie in Fig. 3 schematisch dargestellt umfasst das Verfahren M unter M1 den Schritt des Bestrahlens der Oberfläche 5 des Bauteils 4 mit Ultraviolett-Strahlung 3 durch eine Ultraviolett-Strahlungsquelle 1, beispielsweise ein UV-Strahler, eine Schwarzlichtlampe oder dergleichen. Beispielsweise kann die Ultraviolett-Strahlungsquelle 1 Ultraviolett-Strahlung 3 im nahen Ultraviolett mit Wellenlängen im Bereich von 310 nm bis 400 nm, insbesondere von 320 nm bis 380 nm (UV-A), abstrahlen. Weiterhin umfasst das Verfahren M unter M2 den Schritt des Erfassens von Fluoreszenzstrahlung 12, welche von der Oberfläche 5 des Bauteils 4 aufgrund der Bestrahlung mit der Ultraviolett-Strahlung 3 emittiert wird. Unter M3 umfasst das Verfahren M schließlich den Schritt des Charakterisierens der Oberflächenrückstände 6 auf Basis der erfassten Fluoreszenzstrahlung 12.

Peel-Plys und andere Oberflächenrückstände 6 können fluoreszieren, sobald sie mit der Ultraviolett-Strahlung 3 bestrahlt werden (siehe Fig. 1). Der faserverstärkte Kunststoff des Bauteils 4 kann hingegen in deutlich geringerem Maße fluoreszieren und unter der Ultraviolett-Strahlung 3 dunkel bzw. schwarz erscheinen (insbesondere die Faserausrisse, d.h. die Oberflächenbeschädigungen 7). Abweichungen der Oberfläche 5 des Bauteils 4 in Form von Oberflächenrückständen 6 können somit großflächig ohne größeren Aufwand direkt am untersuchten Bauteil 4 festgestellt werden, indem Flächenabschnitte der Oberfläche 5 mit erhöhter Intensität in der Fluoreszenzstrahlung 12 nachgewiesen werden. Für die visuelle Betrachtung kann beispielsweise schon ein UV-Strahler, wie beispielsweise ein Schwarzlicht-Strahler, ausreichend sein. Oberflächenrückstände 6 können visuell erfasst werden und im Anschluss beseitigt bzw. ausgebessert werden. Beispielsweise kann eine Oberflächenbehandlung in Form von Schleifen erfolgen oder die Oberfläche 5 kann mit Atmosphärendruckplasma bzw. Lasern behandelt werden. Eine Gefahr, die Oberfläche 5 zu verunreinigen bzw. zu kontaminieren, besteht im vorliegenden Fall nicht. Beispielsweise werden keine Analysemittel auf das Bauteil 4 aufgebracht, wie Wasser, Aerosole oder dergleichen. Das Verfahren M der vorliegenden Erfindung ist insbesondere zerstörungsfrei.

In Ausführungsformen kann das Verfahren M vorsehen, dass die Fluoreszenzstrahlung 12 nicht nur visuell erfasst wird, sondern mittels spektroskopischer Intensitätsmessungen oder ähnlichen Verfahren genauer analysiert wird. Hierzu kann das Verfahren M das Detektieren der Fluoreszenzstrahlung 12 mit einem Fluoreszenzstrahlungsdetektor 2 umfassen (siehe Fig. 1), mit Hilfe dessen charakteristische Messgrößen 8 der detektierten Fluoreszenzstrahlung 12 messbar sind. Beispielsweise können die charakteristischen Messgrößen 8 Strahlungsspektren und/oder Intensitätsverteilungen oder dergleichen der detektierten Fluoreszenzstrahlung 12 umfassen. Ferner kann eine Analyseeinrichtung 13 vorgesehen sein, welche die charakteristischen Messgrößen 8 der detektierten Fluoreszenzstrahlung 12 mit Hilfe von statistischen Verfahren der Datenanalyse untersuchen kann. Dies kann beispielsweise das Vergleichen der charakteristischen Messgrößen 8 mit einer oder mehreren Referenzoberflächen beinhalten. Die Analyseeinrichtung 13 kann dazu ausgebildet sein, ein Auswertungsergebnis zu bilden, insbesondere auf Basis univariater und/oder multivariater Analyseverfahren. Beispielsweise können die Referenzoberflächen dazu dienen, das Verfahren zu kalibrieren, indem Werte für die charakteristischen Messgrößen 8 zuerst für die Referenzoberflächen gewonnen werden (beispielsweise ebenfalls mit dem Verfahren M gemäß der Erfindung). Beispielsweise können hierzu Bauteile 4 mit gereinigten bzw. definiert präparierten Oberflächen bereitgestellt werden. Die Analyseeinrichtung 13 kann beispielsweise einen Mikroprozessor oder dergleichen enthalten, mit welchem die charakteristischen Messgrößen vollautomatisch ausgewertet werden können und zudem in digitaler Form weiterverarbeitet werden können bzw. über Datennetzwerke an externe Datenverarbeitungsvorrichtungen weitergeleitet werden können.

Fig. 2 zeigt eine schematische Draufsicht auf eine Oberfläche 5 eines CFK-Bauteils 4, welches in einem Verfahren M gemäß einer weiteren Ausführungsform der Erfindung mit einer Ultraviolett-Strahlungsquelle 1 bestrahlt wird.

Prinzipiell ähnelt das Verfahren M grundsätzlich dem in Verbindung mit Fig. 1 und 3 geschilderten Verfahren. Das Verfahren M in Fig. 2 wird jedoch explizit von einem Roboterarm 9 ausgeführt. Der Roboterarm 9 weist hierzu eine Ultraviolett-Strahlungsquelle 1, einen Fluoreszenzstrahlungsdetektor 2 und eine Plasmadüse 10 auf. Beispielsweise kann der Roboterarm 9 dazu ausgebildet sein, die Oberfläche 5 eines Bauteils 4 entlangzufahren (durch einen Pfeil in Fig. 2 angedeutet) und dieses dabei mit Ultraviolett-Strahlung 3 zu bestrahlen. Gleichzeitig erfasst und detektiert der Fluoreszenzstrahlungsdetektor 2 von der Oberfläche 5 abgestrahlte Fluoreszenzstrahlung 12 und misst darauf aufbauend charakteristische Messgrößen 8 der Fluoreszenzstrahlung 12. Der Roboterarm 9 kann ferner eine Analyseeinrichtung 13 aufweisen (nicht abgebildet), welche mit dem Fluoreszenzstrahlungsdetektor 2 und der Ultraviolett-Strahlungsquelle 1 gekoppelt ist und mit einer Steuereinrichtung (ebenfalls nicht abgebildet) des Roboterarms 9 verbunden ist. Beispielsweise kann die Steuereinrichtung den Roboterarm 9 auf Basis einen Analyseergebnisses der Fluoreszenzstrahlung 12, welches mit der Analyseeinrichtung 13 aus den gemessenen charakteristischen Messgrößen gewonnen wird, steuern und ggf. die Plasmadüse 10 zur Plasmabehandlung 11 von Oberflächenrückständen 6 auf der Oberfläche 5 des Bauteils 4 aktivieren. Ein solcher Roboterarm 9 könnte also gewissermaßen vollautomatisch Bauteile 4 auf Oberflächenrückstände 6 bzw. Oberflächenbeschädigungen 7 untersuchen und dieses ggf. direkt beseitigen bzw. ausbessern. Dem Fachmann wird sich aus dem Kontext erschließen, dass alternativ oder zusätzlich zu einer Plasmabehandlung 11 ebenfalls Schleifwerkzeuge und/oder Laservorrichtungen oder ähnliche Werkzeuge vorgesehen sein können, um die Oberfläche 5 zu bearbeiten.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 1: Ultraviolett-Strahlungsquelle
- 2: Fluoreszenzstrahlungsdetektor
- 3: Ultraviolett-Strahlung
- 4: Bauteil aus FVK
- 5: Oberfläche
- 6: Oberflächenrückstände
- 7: Oberflächenbeschädigung
- 8: Strahlungsspektrum
- 9: Roboterarm
- 10: Plasmadüse
- 11: Plasmabehandlung
- 12: Fluoreszenzstrahlung
- 13: Analyseeinrichtung
- M: Verfahren
- M1: Verfahrensschritt
- M2: Verfahrensschritt
- M3: Verfahrensschritt

## Patentansprüche

1. Verfahren (M) zum Nachweis von Oberflächenrückständen (6) auf Bauteilen (4) aus Faserverbundkunststoff, FVK, mittels Ultraviolett-Bestrahlung, wobei das Verfahren (M) die folgenden Verfahrensschritte umfasst:
Bestrahlen (M1) einer Oberfläche (5) des Bauteils (4) mit Ultraviolett-Strahlung (3) durch eine Ultraviolett-Strahlungsquelle (1) nachdem das Bauteil (4) ausgehärtet und entformt wurde;
Erfassen (M2) von Fluoreszenzstrahlung (12), welche von der Oberfläche (5) des Bauteils (4) aufgrund der Bestrahlung mit der Ultraviolett-Strahlung (3) emittiert wird; und
Charakterisieren (M3) von Oberflächenrückständen (6) auf Basis der erfassten Fluoreszenzstrahlung (12);
wobei die Oberflächenrückstände (6) Komponenten von Trennmitteln umfassen, welche zur Entformung des Bauteils (4) verwendet werden,
wobei die Oberflächenrückstände (6) Abreißgewebe-Rückstände, insbesondere Peel-Ply-Rückstände, umfassen, und
wobei die Komponenten von Trennmitteln auf Basis von Flächenabschnitten der Oberfläche (5) mit erhöhter Intensität der erfassten Fluoreszenzstrahlung (12) charakterisiert werden.

2. Verfahren (M) nach Anspruch 1, wobei das Erfassen (M2) der Fluoreszenzstrahlung (12) das Detektieren der Fluoreszenzstrahlung (12) mit einem Fluoreszenzstrahlungsdetektor (2) umfasst.

3. Verfahren (M) nach Anspruch 2, wobei das Erfassen (M2) der Fluoreszenzstrahlung (12) das Messen von charakteristischen Messgrößen (8) der detektierten Fluoreszenzstrahlung (12) umfasst.

4. Verfahren (M) nach Anspruch 3, wobei die charakteristischen Messgrößen (8) Strahlungsspektren und/oder Intensitätsverteilungen der detektierten Fluoreszenzstrahlung (12) umfassen.

5. Verfahren (M) nach Anspruch 3 oder 4, wobei das Charakterisieren (M3) der Oberflächenrückstände (6) das Analysieren der charakteristischen Messgrößen (8) der detektierten Fluoreszenzstrahlung (12) durch eine Analyseeinrichtung (13) umfasst.

6. Verfahren (M) nach Anspruch 5, wobei die Analyseeinrichtung (13) die charakteristischen Messgrößen (8) mit einer oder mehreren Referenzoberflächen vergleicht.

7. Verfahren (M) nach einem der vorstehenden Ansprüche, wobei das Verfahren (M) zum Nachweis von Oberflächenrückständen (6) auf einer Oberfläche (5) eines Bauteils (4) aus kohlenstofffaserverstärktem Kunststoff, CFK, durchgeführt wird.

8. Verfahren (M) nach einem der vorstehenden Ansprüche, wobei die Oberflächenrückstände (6) Oberflächenbeschädigungen (7) umfassen.

9. Verfahren (M) nach Anspruch 8, wobei die Oberflächenbeschädigungen (7) auf Basis von Flächenabschnitten der Oberfläche (5) mit minimaler Intensität der erfassten Fluoreszenzstrahlung (12) charakterisiert werden.

10. Verfahren (M) nach einem der vorstehenden Ansprüche, wobei die Ultraviolett-Strahlungsquelle (1) dazu ausgebildet ist, Ultraviolett-Strahlung (3) im nahen Ultraviolett mit Wellenlängen im Bereich von 310 nm bis 400 nm abzustrahlen.

## Claims

1. Method (M) of identifying surface residues (6) on components (4) comprising fibre-reinforced plastic (FRP) by means of ultraviolet radiation, wherein the method (M) comprises the following process stages:
irradiation (M1) of a surface (5) of the component (4) with ultraviolet radiation (3) by means of an ultraviolet radiation source (1) after the component (4) has been cured and removed from the mould;
determination (M2) of fluorescent radiation (12) emitted by the surface (5) of the component (4) as a result of the radiation with the ultraviolet radiation (3); and
characterization (M3) of surface residues (6) on the basis of the determined fluorescent radiation (12);
wherein the surface residues (6) comprise components of release agents which are used to remove the component (4) from the mould,
wherein the surface residues (6) comprise residues of peel-off material, particularly peel ply residues, and
wherein the components of release agents are characterised on the basis of portions of the surface (5) with increased intensity of the determined fluorescent radiation (12).

2. Method (M) according to claim 1, **characterised in that** the determination (M2) of the fluorescent radiation (12) comprises the detection of the fluorescent radiation (12) with a fluorescent radiation detector (2).

3. Method (M) according to claim 2, **characterised in that** the recording (M2) of the fluorescent radiation (12) comprises the measurement of characteristic measured values (8) of the detected fluorescent radiation (12).

4. Method (M) according to claim 3, **characterised in that** the characteristic measured values (8) comprise radiation spectra and/or intensity distributions of the detected fluorescent radiation (12).

5. Method (M) according to claim 3 or claim 4, **characterised in that** the characterisation (M3) of the surface residues (6) comprises the analysis of the characteristic measured values (8) of the detected fluorescent radiation (12) by means of an analysis apparatus (13).

6. Method (M) according to claim 5, **characterised in that** the analysis apparatus (13) compares the characteristic measured values (8) with one or more reference surfaces.

7. Method (M) according to any one of the preceding claims, **characterised in that** the method (M) for identifying surface residues (6) is performed on a surface (5) of a component (4) comprising carbon fibre-reinforced plastic (CFP).

8. Method (M) according to any one of the preceding claims, **characterised in that** the surface residues (6) comprise surface damage (7).

9. Method (M) according to claim 8, **characterised in that** the surface damage (7) is characterised on the basis of portions of the surface (5) with minimal intensity of the recorded fluorescent radiation (12).

10. Method (M) according to any one of the preceding claims, **characterised in that** the ultraviolet radiation source (1) is provided to radiate ultraviolet radiation (3) in near-ultraviolet with wavelengths in the region of 310 nm to 400 nm.

## Revendications

1. Procédé (M) d'identification de résidus de surface (6) sur des éléments de construction (4) en matière plastique renforcée de fibres, PRF, à l'aide d'un rayonnement ultraviolet, dans lequel le procédé (M) comprend les étapes de procédé suivantes :
irradiation (M1) d'une surface (5) de l'élément de construction (4) à l'aide du rayonnement ultraviolet (3) par l'intermédiaire d'une source de rayonnement ultraviolet (1) après que l'élément de construction (4) ait été durci et démoulé ;
détermination (M2) d'un rayonnement de fluorescence (12), qui est émis par la surface (5) de l'élément de construction (4) suite à l'irradiation à l'aide du rayonnement ultraviolet (3) ; et
caractérisation (M3) de résidus de surface (6) sur la base du rayonnement de fluorescence (12) déterminé ;
dans lequel les résidus de surface (6) comprennent des agents de démoulage qui sont utilisés pour le démoulage de l'élément de construction (4),
dans lequel les résidus de surface (6) comprennent des résidus de tissu d'arrachage, en particulier des résidus « Peel Ply », et
dans lequel les agents de démoulage sont caractérisés sur la base de sections superficielles de la surface (5) avec une plus grande intensité du rayonnement de fluorescence (12) déterminé.

2. Procédé (M) selon la revendication 1, dans lequel la détermination (M2) du rayonnement de fluorescence (12) comprend la détection du rayonnement de fluorescence (12) à l'aide d'un détecteur de rayonnement de fluorescence (2) .

3. Procédé (M) selon la revendication 2, dans lequel la détermination (M2) du rayonnement de fluorescence (12) comprend la mesure de grandeurs de mesure caractéristiques (8) du rayonnement de fluorescence (12) détecté.

4. Procédé (M) selon la revendication 3, dans lequel les grandeurs de mesure caractéristiques (8) comprennent des spectres de rayonnement et/ou des distributions d'intensité du rayonnement de fluorescence (12) détecté.

5. Procédé (M) selon la revendication 3 ou 4, dans lequel la caractérisation (M3) des résidus de surface (6) comprend l'analyse des grandeurs de mesure caractéristiques (8) du rayonnement de fluorescence (12) détecté par l'intermédiaire d'un moyen d'analyse (13).

6. Procédé (M) selon la revendication 5, dans lequel le moyen d'analyse (13) compare les grandeurs de mesure caractéristiques (8) à une ou plusieurs surfaces de référence.

7. Procédé (M) selon une des revendications précédentes, dans lequel le procédé (M) d'identification de résidus de surface (6) est mis en oeuvre sur une surface (5) d'un élément de construction (4) en matière plastique renforcée de fibres de carbone, PRFC.

8. Procédé (M) selon une des revendications précédentes, dans lequel les résidus de surface (6) comprennent des détériorations de surface (7).

9. Procédé (M) selon la revendication 8, dans lequel les détériorations de surface (7) sont caractérisées sur la base de sections superficielles de la surface (5) avec une intensité minimale du rayonnement de fluorescence (12) détecté.

10. Procédé (M) selon une des revendications précédentes, dans lequel la source de rayonnement ultraviolet (1) est configurée pour émettre un rayonnement ultraviolet (3) dans le proche ultraviolet avec des longueurs d'onde comprises dans la plage de 310 nm à 400 nm.
